# EUROPÄISCHE PATENTANMELDUNG

(11) **EP 1 104 223 A2**
(43) Veröffentlichungstag der Anmeldung: **30.05.2001**
(21) Anmeldenummer: 00120987.3
(22) Anmeldetag: 27.09.2000
(51) Int. Cl.: H05B 3/42, B29C 65/60

(54) **Vorrichtung zur Erwärmung von thermoplastischen Kunststoffteilen sowie Verfahren zum Umformen**

(30) Priorität: 26.11.1999 DE 19957042
(71) Anmelder: Heraeus Noblelight GmbH, 63450 Hanau (DE)
(72) Erfinder: Scherzer, Joachim, 63486 Bruchköbel (DE); Weber, Bernhard, 82256 Fürstenfeldbruck (DE)
(74) Vertreter: Kühn, Hans-Christian

(57) **Zusammenfassung**

Zur Erwärmung und eventuellen Verformung von thermoplastischen Kunststoffteilen durch Bestrahlung ist ein in einem Quarzrohr (1) befindlicher Wärmestrahler aus elektrischem Widerstandsdraht (3), der an seinen beiden Enden innerhalb des Quarzrohres mit abisolierten Enden einer temperaturbeständigen Litze, die an eine Stromversorgung anschließbar ist, elektrisch und mechanisch fest verbunden; an der der Erwärmung abgewandten Seite ist das Quarzrohr mit einer Reflexionsschicht versehen und ein wärmebeständiges Element (2) zur Halterung des Quarzrohres ist wenigstens im Bereich seiner Rohrenden vorgesehen, wobei das Quarzrohr in Form einer Wendel ausgebildet ist; die Quarz-Wendel (1) ist mittels des als Halterung dienenden wärmebeständigen Elements entlang der Wendel-Achse auf den Kunststoff-Körper (4) aufschiebbar.

## Beschreibung

Die Erfindung betrifft eine Vorrichtung zur Erwärmung von thermoplastischen Kunststoffteilen durch wenigstens teilweise Bestrahlung mittels eines in einem Quarzrohr befindlichen Wärmestrahlers aus elektrischem Widerstandsdraht, der an seinen beiden Enden an eine Stromversorgung anschließbar ist, wobei ein wärmebeständiges Element zur Halterung des Quarzrohres wenigstens im Bereich seiner Rohrenden vorgesehen ist, sowie ein Verfahren zum Umformen.

Aus der DE 28 54 393 A1 ist ein Verfahren bekannt, bei dem zwecks Umformen von thermoplastischen bzw. thermoelastischen Halbzeugen diese mittels Wärmestrahler bis zum Erreichen der Umformtemperatur in einem zur Erwärmung geeigneten Abstand bewegt und anschließend das auf Umformtemperatur befindliche thermoplastische Halbzeug in an sich bekannter Weise umgeformt wird. Zur Erzeugung der Wärmestrahlung sind Infrarotstrahler vorgesehen.

Weiterhin ist aus der DE-OS 16 04 607 eine Vorrichtung zum Verschweißen der Lagen von thermoplastischen Kunststoff-Folien mittels eines elektrischen Wärmestrahlers - vorzugsweise eines elektrischen Widerstandsdrahtes in einem Quarzrohr - bekannt; dabei ist der elektrische Wärmestrahler mit einem wassergekühlten Stab hoher Wärmeleitfähigkeit, insbesondere einer Kupferlegierung versehen, der an seiner zu den zu verschweißenden Folien gerichteten Seite einen sich über die Länge des Strahlers erstreckenden Schlitz aufweist, durch dessen Breite die Breite der Schweißnaht bestimmt ist. Der Stab ist an seiner den zu verschweißenden Folien abgewandten Seite ebenfalls offen und mit einer äußeren Reflexionsschicht, insbesondere mit einer Goldauflage, versehen.

Weiterhin ist aus der CH-PS 407 357 ein Quarzglasdurchlaufrohr bekannt, das in seinem Inneren elektrische Heizleiter aufweist, wobei die Quarzglasdurchlaufrohre in Form von Rohrschlangen bzw. Quarzrohr-Wendeln ausgebildet sind.

Bei den zu behandelnden Halbzeugen handelt es sich in der Regel um flächenhafte Gebilde, bzw. flüssige Substanzen, wobei eine Konzentration der Wärmestrahlung auf besonders gestaltete Halbzeuge aus Kunststoff nicht vorgesehen ist.

Aufgabe der Erfindung ist es, Kunststoffkleinteile - wie beispielsweise Kunststoffnieten - wenigstens teilweise mittels Bestrahlung bis zum Erweichungspunkt zu erwärmen und anschließend mechanisch zu verformen oder auch miteinander zu verbinden.

Die Aufgabe wird vorrichtungsgemäß dadurch gelöst, dass das Quarzrohr in Form einer Wendel ausgebildet ist, wobei die Wendel mittels des als Halterung dienenden Elements entlang der Wendel-Achse auf einen Kunststoff-Körper aufschiebbar ist.

Als vorteilhaft erweis es sich, dass eine rasche kostengünstige Aufheizung auch in einer Mehrfach-Wendel-Vorrichtung möglich ist.

Vorteilhafte Ausgestaltungen der Vorrichtung sind in den Ansprüchen 2 bis 10 angegeben.

Vorzugsweise ist der Widerstandsdraht an seinen beiden Enden innerhalb des Quarzrohres mit abisolierten Enden einer temperaturbeständigen Litze elektrisch und mechanisch fest verbunden.

In einer bevorzugten Ausgestaltung befindet sich in dem als Wendel bzw. Rohrschlange ausgebildeten Quarzrohr einer Heizleiterspirale aus einer Fe/Cr/Al-Legierung. Die Quarzrohr-Wendel wird mit ihren beiden Enden in einem wärmebeständigen Element gehalten. Das wärmebeständige Element weist dabei eine langgestreckte Ausnehmung auf, deren Längsachse parallel zur Wendelachse der Quarzrohrschlange verläuft. Die Ausnehmung ist vorzugsweise als Bohrung ausgebildet.

Hier erweist es sich als vorteilhaft, dass sich mit der Erfindung ein weiterer Anwendungsbereich - beispielsweise bei der Montage von Baugruppen in der Automobil-Zulieferer-Industrie- erschließen lässt, wobei die Vorrichtung aufgrund ihrer kleinen Abmessung auch als Teil eines Handhabungssystems einsetzbar ist.

Vorteilhafterweise ist im Bereich des äußeren Umfangs der Wendel eine Reflexionsschicht vorgesehen.

Die Quarzrohr-Wendel ist in einer bevorzugten Ausführungsform auf ihrer der Wendelachse abgewandten Außenseite mit einer auf der Außenoberfläche des Quarzrohrs aufgebrachten reflektierenden Schicht, vorzugsweise mit einer Goldschicht, versehen. Hierdurch lässt sich eine relativ hohe Energieausbeute erzielen.

Die Aufgabe wird für ein Verfahren zum Umformen eines Teils eines Kunststoff-Körpers unter Erwärmung auf Umformtemperatur mit Hilfe der erfindungsgemäßen Vorrichtung nach einem der Ansprüche 1 bis 10 dadurch gelöst, dass der Kunststoff-Körper wenigstens an seinem zur Umformung vorgesehenen Teil stiftförmig ausgebildet ist, wobei die Quarz-Wendel mittels einer Halterung entlang der Wendel-Achse auf den Kunststoff-Körper wenigstens zum Teil aufgeschoben und erwärmt wird, wobei durch einen relativ zum Kunststoff-Körper bewegten Nietformstempel der stiftförmige Teil an seinem Ende zu einem Nietkopf geformt wird.

Die Aufgabe wird für ein Verfahren zum Umformen wenigstens zweier Teile eines Kunststoff-Körpers unter Erwärmung auf Umformtemperatur mittels wenigstens zweier Vorrichtungen nach einem der Ansprüche 1 bis 10, dadurch gelöst, dass die Kunststoff-Körper wenigstens an dem jeweils zur Umformung vorgesehenen Teil stiftförmig ausgebildet sind, wobei die jeweilige Quarz-Wendel mittels Halterung entlang der Wendel-Achse wenigstens zum Teil auf den jeweiligen Kunststoff-Körper aufgeschoben und erwärmt wird, wobei durch jeweils einen relativ zum Kunststoff-Körper bewegten Nietformstempel jeweils der stiftförmige Teil nach seiner Erwärmung mittels Druckeinwirkung an seinem Ende zu einem Nietkopf geformt wird.

Als besonders vorteilhaft erweist sich das verhältnismäßig einfache Verfahren, mittels einer kompakten, leicht zu führenden Erwärmungsvorrichtung eine rasche Verformung von Stiften zu Nieten vorzunehmen, wobei sich dran weitere Verfahrensschritte ohne Probleme anschließen können.

Ein weiterer Vorteil ist darin zu sehen, dass das erfindungsgemäße Verfahren auch mit Hilfe einer Handhabungsvorrichtung durchführbar ist.

Im folgenden ist der Gegenstand anhand der Figuren 1 bis 4 näher erläutert.
Figur 1 zeigt schematisch in einer perspektivischen Darstellung die Quarzrohr-Wendel zusammen mit dem als wärmebeständiges Element ausgebildeten Keramikteil zwecks Halterung;
Figur 2 zeigt schematisch die Anordnung des Kunststoffstifts vor Einbringen in die Quarzrohr-Wendel;
Figur 3 zeigt die Quarz-Wendel im geheizten Zustand, wobei die Quarz-Wendel entlang der Wendelachse auf den Kunststoff-Körper aufgeschoben wird, während von oben ein Nietformstempel in die Quarz-Wendel abgesenkt wird, um einen Nietkopf zu formen.
Figur 4 zeigt schematisch die Anordnung von einem Kunststoff-Körper mit zwei Stiften, die gleichzeitig jeweils von einer Quarzrohrwendel erwärmt werden.

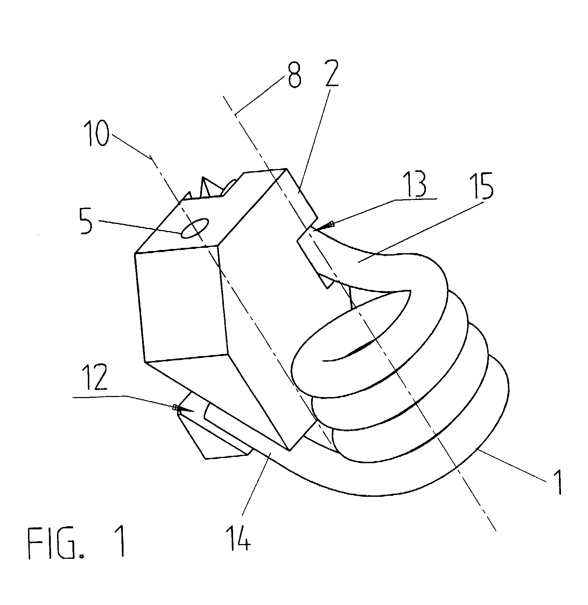

Gemäß Figur 1 weist die Quarzrohrwendel 1 mehrere Windungen - beispielsweise vier Windungen - auf, wobei der Außendurchmesser der Quarzrohr-Wendel im Bereich von 25 bis 40 mm liegt; das Quarzrohr selbst weist einen Durchmesser im Bereich von 6 bis 8 mm (außen) auf, wobei seine Wandstärke im Bereich von 0,8 bis 1,2 mm liegt.

Im wendelförmigen Quarzrohr befindet sich eine hier nicht sichtbare Heißleiterspirale aus einer Fe/Cr/Al-Legierung; die Heizleiterspirale ist an ihren beiden Enden innerhalb des Quarzrohres mit abisolierten Enden einer temperaturbeständigen, elektrisch isolierten Litze elektrisch und mechanisch fest verbunden. Die Litze ist an ihrem dem Quarzrohr abgewandten Ende an eine Stromversorgung zwecks Erwärmung der Quarz-Wendel anschließbar. Das Quarzrohr 1 mit innenliegendem Heizleiter ist mit einem prismatisch geformten Keramikteil 2 verbunden, das Nuten zur Führung der Litze bzw. der Quarzrohr-Enden aufweist und so geformt ist, dass Aufnahme und Erwärmung auch mit einem Handhabungsgerät bzw. einer Roboter-Vorrichtung erfolgen kann. Die Ausnehmung 5 bzw. Aufnahmebohrung im Keramikteil 2 verläuft mit ihrer Achse 10 parallel zur Wendelachse 8 der Quarz-Wendel 1. Keramikteil 2 weist auf zwei sich gegenüberliegenden Außenseiten Ausnehmungen 12, 13 auf, um die um 45° gegenüber der Wendelachse geneigten Quarzrohrenden 14, 15 mit Austritt der hier nicht sichtbaren Litze für den elektrischen Anschluss aufnehmen zu können.

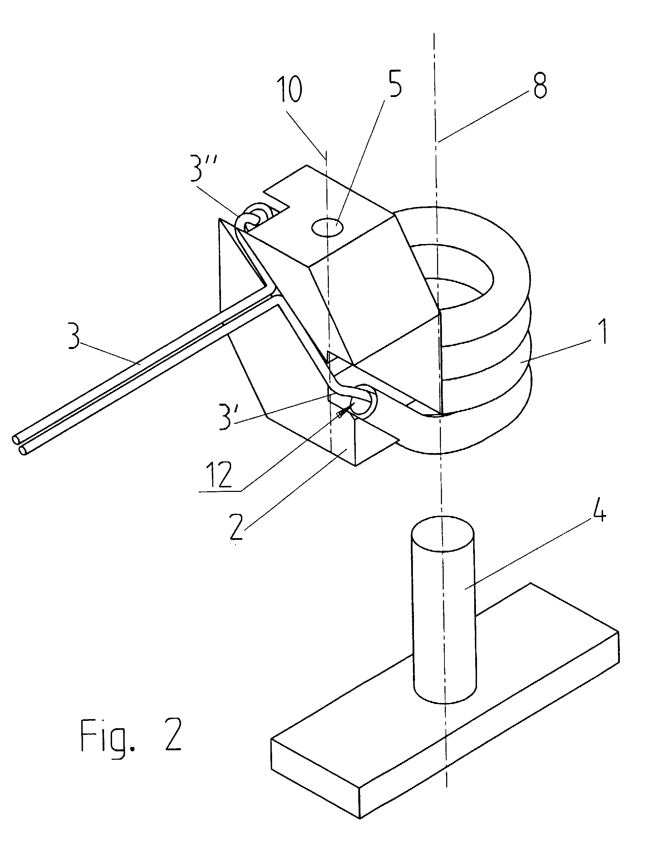

Anhand Figur 2 ist die Positionierung eines in die Quarz-Wendel 1 einzubringenden Kunststoff-Körpers 4 erkennbar, wobei der Kunststoff-Körper mit einem stiftförmigen Oberteil ausgebildet ist, welches durch Erwärmung mit Hilfe der Quarz-Wendel 1 umgeformt werden soll. Mittels eines hier nicht dargestellten Handhabungsgerätes zur Führung der Quarzrohrwendel 1 bzw. einer ebenfalls nicht dargestellten Halterung für Kunststoff-Körper 4 wird auf den stiftförmigen Teil des Kunststoff-Körpers entlang der Wendelachse 8 die Quarzrohrwendel aufgebracht und anschließend wird das Quarzrohr 1 über die elektrischen Zuleitungen von Litze 3 durch eine hier nicht dargestellte Energieversorgung soweit erhitzt, dass aufgrund der austretenden Wärmestrahlung eine Verformung im Bereich der Spitze des Kunststoff-Körpers 4 erfolgen kann.

Anhand Figur 2 ist auch der Austritt eines der beiden Leiter 3' von Litze 3 aus einem Ende der Quarz-Wendel 1 erkennbar; der zweite Leiter 3" von Litze 3 ist am anderen Ende der Quarz-wendel 1 entsprechend mit dem nicht sichtbaren Heizleiter in der Wendel verbunden.

Da es nur auf die relative Bewegung zwischen Wärmequelle bzw. Strahlenquelle und Kunststoff-Körper ankommt, ist es im Prinzip gleichgültig, ob die Quarz-Wendel 1 auf Kunststoff-Körper 4 abgesenkt wird, oder ob Kunststoff-Körper 4 mittels verschiebbarer Halterung in die Quarz-Wendel 1 hineingeschoben ist; es ist jedoch wesentlich, dass eine Relativbewegung zwischen beiden stattfindet.

Bei Einsatz eines Roboters bzw. Handhabungsgerätes wird die Quarzwendel 1 mit Hilfe eines Roboterarmes auf Kunststoff-Körper 4 aufgeschoben.

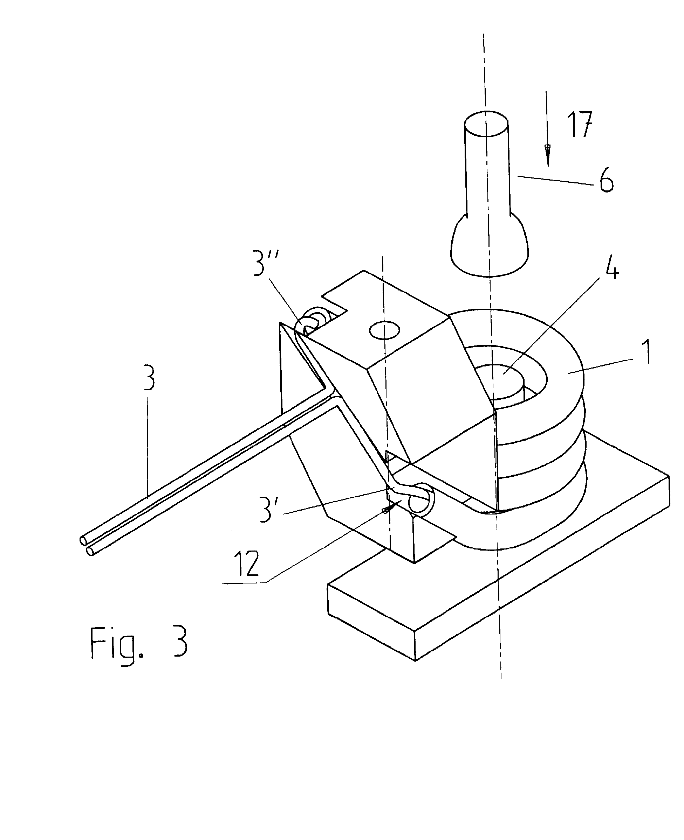

Anhand Figur 3 ist erkennbar, dass Kunststoff-Körper 4 sich mit seinem stiftförmigen Teil im Inneren der Quarz-Wendel befindet, wobei Kunststoff-Körper 4 durch Nietformstempel 6 in Richtung des Pfeils 17 zusammengepresst wird, so dass das Stiftende zu einem Nietenkopf umgewandelt wird. Im Verhältnis zur Wendelachse 8 ist die Aufnahmebohrung 5 mit ihrer Längsachse 10 parallel ausgerichtet, wobei eine weitgehend automatisierte Fertigung mit Hilfe der zuvor genannten Handhabungsvorrichtung bzw. Robotervorrichtung möglich ist.

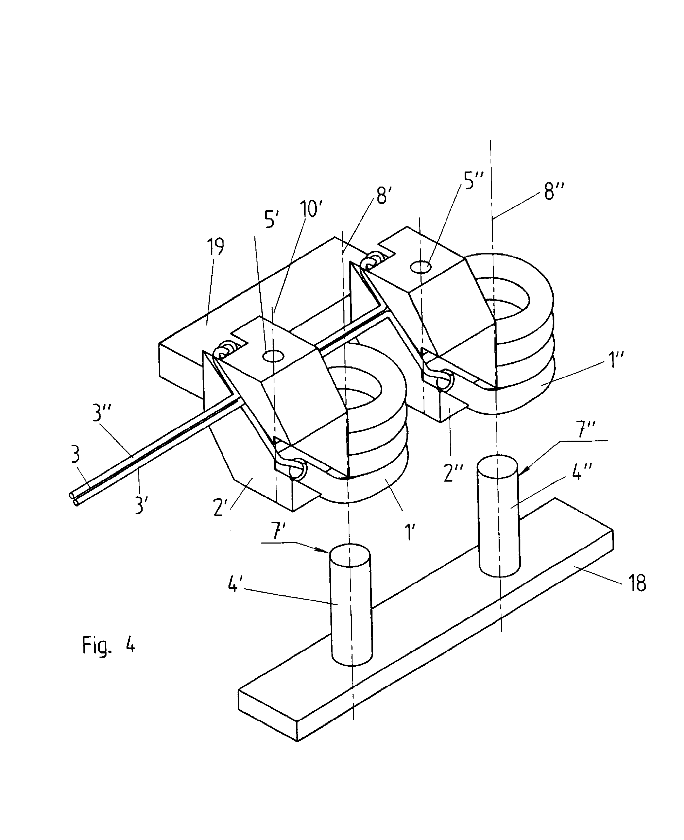

Gemäß Figur 4 weist ein Kunststoff-Körper 18 zwei mit ihm verbundene Kunststoffstifte 4', 4" auf, die durch zwei in einer gemeinsamen Halterung befindliche Quarzwendeln 1', 1" umgeformt werden sollen. Anhand Figur 4 ist erkennbar, dass sich beide wärmebeständigen Elementen 2', 2" durch eine gemeinsame starre Verbindung 19 mittels einer hier nicht gezeigten Handhabungsvorrichtung bzw. Roboterarms parallel so geführt werden können, dass anstelle des bisher einzelnen Kunststoffstiftes 4 nunmehr zwei Kunststoffstifte 4', 4" entlang der Wendelachsen 8', 8" gleichzeitig erwärmt und anschließend verformt werden können. Eine solche Vorrichtung hat den Vorteil, dass durch Parallelerwärmung insbesondere bei zwei oder mehr als zwei zu verformenden Kunststoffstiften erhebliche Zeiteinsparungen zu erzielen sind. Die Ausnehmungen in Element 2', 2" sind mit 5', 5" bezeichnet; die Achsen der Ausnehmung weisen Bezugszeichen 10', 10" auf.

Prinzipiell ist es jedoch auch möglich, zwei oder mehr Kunststoffstifte aufeinanderfolgend zu erwärmen und anschließend umzuformen.

Der Durchmesser des Quarzrohres beträgt 5 bis 8 mm, vorzugsweise 6 bis 7 mm, während die Wandstärke vorzugsweise ca. 1 mm beträgt. Die hochtemperaturbeständige Keramik von Keramikteil 2 besteht aus Aluminiumsilikat oder Magnesiumsilikat oder Aluminiumoxid. Die elektrische Leistung der Quarz-Wendel-Anordnung liegt im Bereich von 150 bis 350 Watt. Die Wellenlänge der abgegebenen Wärmestrahlung liegt im Wellenlängenbereich von 2,1 µm bis 2,7 µm.

## Patentansprüche

1. Vorrichtung zur Erwärmung von thermoplastischen Kunststoffteilen durch Bestrahlung mittels eines in einem Quarzrohr befindlichen Wärmestrahlers aus elektrischem Widerstandsdraht, der an seinen beiden Enden an eine Stromversorgung anschließbar ist, wobei ein wärmebeständiges Element zur Halterung des Quarzrohres wenigstens im Bereich seiner Rohrenden vorgesehen ist, dadurch gekennzeichnet, dass das Quarzrohr (1) in Form einer Wendel ausgebildet ist, wobei die Wendel mittels des als Halterung dienenden Elements (2) entlang der Wendel-Achse (8) auf einen Kunststoff-Körper (4) aufschiebbar ist.

2. Vorrichtung nach Anspruch 1, dadurch gekennzeichnet, dass der Widerstandsdraht an seinen beiden Enden innerhalb des Quarzrohres mit abisolierten Enden der Leiter (3', 3") einer temperaturbeständigen Litze (3) elektrisch und mechnisch fest verbunden ist.

3. Vorrichtung nach Anspruch 1 oder 2, dadurch gekennzeichnet, dass sich im Quarzrohr (1) eine Heizleiterspirale aus einer Fe/Cr/Al-Legierung befindet.

4. Vorrichtung nach einem der Ansprüche 1 bis 3, dadurch gekennzeichnet, dass die Wendel mit ihren beiden Enden in dem als Keramikteil ausgebildeten wärmebeständigen Element (2) gehalten wird.

5. Vorrichtung nach einem der Ansprüche 1 bis 4, dadurch gekennzeichnet, dass das wärmebeständige Element (2) eine langgestreckte Ausnehmung (5) aufweist, deren Längsachse (10) parallel zur Wendel-Achse (8) der Quarzrohr-Wendel verläuft.

6. Vorrichtung nach Anspruch 5, dadurch gekennzeichnet, dass die Ausnehmung (5) in dem Element (2) als Bohrung ausgebildet ist.

7. Vorrichtung nach Anspruch 5 oder 6, dadurch gekennzeichnet, dass das wärmebeständige Element (2) mit seiner Ausnehmung (5) zur Befestigung an einem Handhabungsgerät (Roboter) vorgesehen ist.

8. Vorrichtung nach einem der Ansprüche 1 bis 7, dadurch gekennzeichnet, dass im Bereich des äußeren Umfangs der Wendel eine Reflexionsschicht vorgesehen ist.

9. Vorrichtung nach einem der Ansprüche 1 bis 8, dadurch gekennzeichnet, dass die Quarzrohr-Wendel auf ihrer der Wendel-Achse (8) abgewandten Außen-Seite eine die Strahlung reflektierende Schicht aufweist.

10. Vorrichtung nach Anspruch 9, dadurch gekennzeichnet, dass als reflektierende Schicht Gold aufgebracht ist.

11. Verfahren zum Umformen wenigstens eines Teils eines Kunststoffkörpers unter Erwärmung auf Umformtemperatur mittels einer Vorrichtung nach einem der Ansprüche 1 bis 8, dadurch gekennzeichnet, dass der Kunststoffkörper (4) wenigstens an dem zur Umformung vorgesehenen Teil (7) stiftförmig ausgebildet ist, wobei die Quarz-Wendel (1) mittels Halterung entlang der Wendel-Achse (8) wenigstens zum Teil auf dem Kunststoff-Körper (4) aufgeschoben und erwärmt wird, wobei durch einen relativ zum Kunststoffkörper (4) bewegten Nietformstempel (6) der stiftförmige Teil (7) nach seiner Erwärmung mittels Druckeinwirkung an seinem Ende zu einem Nietkopf geformt wird.

12. Verfahren zum Umformen wenigstens zweier Teile eines Kunststoffkörpers unter Erwärmung auf Umformtemperatur mittels wenigstens zweier Vorrichtungen nach einem der Ansprüche 1 bis 8, dadurch gekennzeichnet, dass die Kunststoffkörper (4', 4") wenigstens an dem jeweils zur Umformung vorgesehenen Teil (7', 7") stiftförmig ausgebildet ist, wobei die jeweilige Quarz-Wendel (1', 1") mittels Halterung entlang der Wendel-Achse (8', 8") wenigstens zum Teil auf den jeweiligen Kunststoff-Körper (4', 4") aufgeschoben und erwärmt wird, wobei durch jeweils einen relativ zum Kunststoffkörper (4', 4") bewegten Nietformstempel jeweils der stiftförmige Teil nach seiner Erwärmung mittels Druckeinwirkung an seinem Ende zu einem Nietkopf geformt wird.
